# EUROPÄISCHE PATENTSCHRIFT

(11) **EP 2 783 832 B1**
(45) Veröffentlichungstag und Bekanntmachung des Hinweises auf die Patenterteilung: **21.09.2016**
(21) Anmeldenummer: 14161840.5
(22) Anmeldetag: 26.03.2014
(51) Int. Cl.: B29C 51/04, B29C 51/16, B29C 51/14, B29K 105/04

(54) **VORRICHTUNG ZUM TIEFZIEHEN**
APPARATUS FOR DEEP DRAWING
DISPOSITIF D'EMBOUTISSAGE

(30) Priorität: 27.03.2013 DE 102013103170; 24.03.2014 DE 102014104048
(43) Veröffentlichungstag der Anmeldung: 01.10.2014
(73) Patentinhaber: Coveris Rigid (Zell) Deutschland GmbH, 65856 Zell / Kaimt (DE)
(72) Erfinder: Bergner, Dieter, 74676 Niedernhall (DE)
(74) Vertreter: Hutzelmann, Gerhard

(56) Entgegenhaltungen:
- EP-A1- 1 120 359
- WO-A1-2010/130933
- JP-A- S5 239 479
- JP-A- 2010 036 416
- DATABASE WPI Week 198750 Thomson Scientific, London, GB; AN 1987-353170 XP002727900, -& JP S62 257825 A (TOYOTA SHATAI KK) 10. November 1987 (1987-11-10)
- DATABASE WPI Week 200504 Thomson Scientific, London, GB; AN 2005-034822 XP002727901, -& JP 2004 351937 A (ASANO KENKYUSHO KK) 16. Dezember 2004 (2004-12-16)

## Beschreibung

Die Erfindung bezieht sich auf eine Vorrichtung zum Tiefziehen eines tiefziehfähigen Materials, wie z.B. einer Kunststofffolie, mit einer der späteren Form des tiefzuziehenden Gegenstandes angepassten Mulde und einem Stempel zum Hineindrücken des Ausgangsmaterials in die Mulde. Solche Vorrichtungen werden in JP2010 036416, JP2010036416, DE2539354 und SU89405 offenbart.

Bei den bekannten Vorrichtungen dieser Art ist der Stempel jeweils der Form der Mulde ähnlich ausgebildet.

Beim Tiefziehen wird das tiefzuziehende Material gestreckt und verdünnt. Dabei ergeben sich am fertigen Gegenstand unterschiedliche Wandstärken sowohl am Boden als auch an den Wänden.

Aufgabe der Erfindung ist es, eine Vorrichtung der genannten Art so auszugestalten, daß das Ausgangsmaterial beim Tiefziehen weitgehend gleichmäßig verdünnt wird.

Diese Aufgabe wird erfindungsgemäß mit den Merkmalen des Anspruchs 1 gelöst.

Damit liegt während des Hineindrückens des Ausgangsmaterials dieses nicht mehr vollflächig am Stempel an und kann sich leichter über die Fläche gesehen ausgleiche und da mehrere Rippen am Umfangsrand übereinander angeordnet sind wird der Anpressdruck des Stempels am tiefzuziehende Material weiter verringert und ein noch besserer Ausgleich der Materialflächen ist gegeben.

Als sehr vorteilhaft hat es sich auch ergeben, wenn erfindunggemäß der Boden des Stempels von unten her kalottenförmig hohl ausgebildet ist.

Damit ist gewährleistet, daß der Stempel lediglich mit seinen Rippen am tiefzuziehenden Material angreift und damit nur eine geringe Haftung vorliegt.

Je nach Einsatzzweck bzw. welche Form der tiefgezogene Gegenstand aufweisen soll kann die Mulde und der Stempel einen kreisförmigen Querschnitt aufweisen.

Es ist jedoch auch möglich, daß die Mulde und der Stempel einen von der Kreisform abweichenden ovalen, quadratischen oder rechteckigen Querschnitt aufweisen.

In der Mulde sind Öffnungen vorgesehen, die entweder mit Unterdruck beaufschlagt werden, um das tiefzuziehende Material vollständig in die Mulde hineinzuziehen oder die Öffnungen sind zum Ablassen der eingeschlossenen Luft vorgesehen, wenn mit Überdruck gearbeitet wird.

Eine vorteilhafte weitere Ausgestaltung der Erfindung ist dadurch gekennzeichnet, dass die Vorrichtung so ausgelegt ist, dass innerhalb der Vorrichtung sowohl eine Verpackung geformt, diese gefüllt und beispielsweise durch Siegeln verschlossen wird.

Damit ist auf rationelle Weise die Herstellung einer fertigen und gefüllten Verpackung erreicht

Ebenfalls sehr vorteilhaft ist es, wenn gemäß einer weiteren Ausgestaltung der Erfindung eine Einrichtung vorgesehen ist, die es ermöglicht, ein Label oder dergleichen in die Tiefziehform einzulegen.

Damit ist auf einfache Weise eine Etikettierung der Verpackung ohne zusätzlichen Verfahrensschritt erreicht.

Weiterhin sehr vorteilhaft ist es, wenn erfindungsgemäß eine Einrichtung vorgesehen ist, die es ermöglicht, den in der Vorrichtung erzeugten Behälter zu dekorieren bzw. beim Tiefziehen zu dekorieren.

Eine ganz vorteilhafte Ausgestaltung der Erfindung ist dadurch gekennzeichnet, dass die Vorrichtung zur Verarbeitung beliebiger, tiefziehfähiger Materialien, insbesondere zur Verarbeitung von Ein- oder Mehrschichtmaterialien aus Kunststoffmaterialien wie zum Beispiel PE, PS, PP, PET, PLA oder dergleichen, wobei auch Barriereschichten vorgesehen sein können, ausgelegt ist.

Damit ist mit der erfindungsgemäßen Vorrichtung ein weiter Bereich an einzusetzenden Kunststoffen abgedeckt.

Ebenfalls äußerst vorteilhaft ist es erfindungsgemäß, wenn die Vorrichtung zur Verarbeitung beliebiger geschäumter, tiefziehfähiger Materialien, insbesondere zur Verarbeitung von Ein- oder Mehrschichtmaterialien aus Kunststoffmaterialien wie zum Beispiel PE, PS, PP, PET, PLA oder dergleichen, wobei auch Barriereschichten vorgesehen sein können und mindestens eine Schicht aus einem geschäumten Kunststoffmaterial besteht, ausgelegt ist.

Gerade geschäumte, aber auch kompakte Kunststoffmaterialien sind bei geringen Folienstärken und größeren Tiefziehtiefen bzw. bei ungünstigen Tiefziehverhältnissen bislang nur schlecht tiefziehbar bzw. benötigen eine größere Dicke der tiefzuziehenden Folie aufgrund der sich ergebenden ungleichmäßigen Dickeverteilung im tiefgezogenen Gegenstand.

Bei geschäumten Materialien besteht die Gefahr, daß die Schäumung beim Tiefziehen zerstört wird.

Zudem besteht die Gefahr, daß bei Verwendung dünner tiefzuziehender Folien beim Tiefziehen die Folie aufreißt. Durch die vorliegende Erfindung wird jedoch eine gezielte Steuerung des Tiefziehvorganges ermöglicht, so dass das Tiefziehen von ungeschäumten und geschäumten Materialien deutlich erleichtert wird.

Eine weitere sehr vorteilhafte Ausgestaltung der Erfindung ist darin zu sehen, daß der Stempel bzw. Vorstrecker aus einem an die tiefzuziehenden Materialien angepassten Material gefertigt ist.

Durch die Auswahl eines an die tiefzuziehenden Kunststoffe angepassten Materials für den Stempel bzw. Vorstrecker können besonders gute Tiefziehergebnisse erzielt werden. Unterschiedliche Materialien des Stempels weisen unterschiedliche Gleiteigenschaften gegenüber den Kunststoffen auf und beeinflussen so das Tiefziehergebnis.

In der Zeichnung ist die Erfindung anhand von zwei Ausführungsbeispielen veranschaulicht. Dabei zeigen:
- Fig. 1: eine Darstellung eines Stempels und einer Mulde zum Tiefziehen, wobei der Stempel mit einer umlaufenden Rippe versehen ist und
- Fig.2: eine Schnittdarstellung von Mulde und Stempel, der mit zwei umlaufenden Rippen ausgestattet ist.

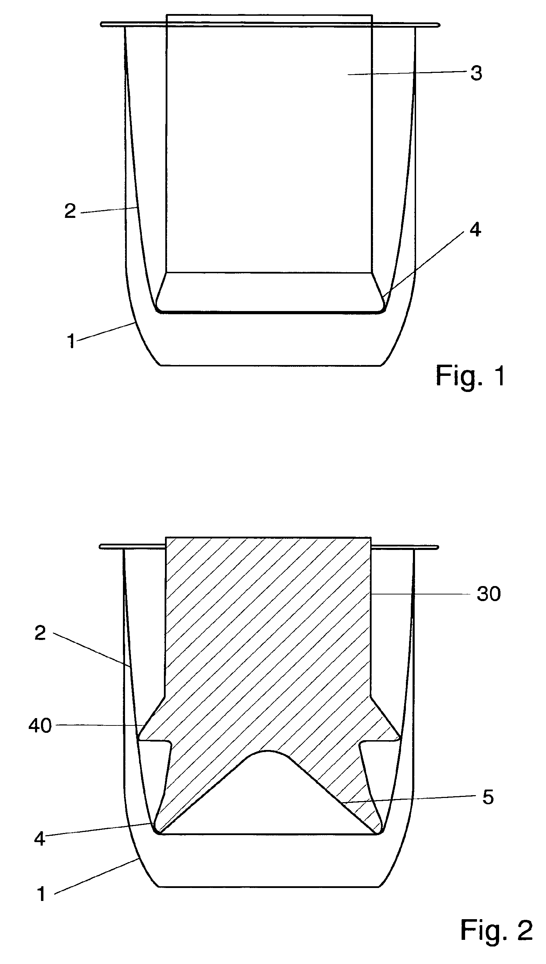

Mit 1 ist in Fig.1 eine schematisch dargestellte Mulde bezeichnet, in welche ein tiefziehfähiges Material 2 hineingezogen bzw. hineingedrückt werden soll. Dazu ist ein Stempel 3 vorgesehen, der von oben her in die Mulde 1 einzudringen vermag und dabei das Material 2 in die Mulde hineindrückt. Das Material 2 wurde vorher erwärmt um es tiefziehfähig zu machen.

Der Stempel 3 ist am unteren Ende mit einer umlaufenden Rippe 4 versehen, die über den Umfang des Stempels 3 selbst vorsteht.

Dadurch liegt das tiefzuziehende Material 2 während der Bewegung des Stempels 3 nach unten lediglich an dieser Rippe 4 an und kann somit Dehnungen im Mantelbereich und im Bodenbereich gegeneinander ausgleichen.

Sobald der Stempel 3 seine untere Endstellung erreicht hat, wird der Tiefziehvorgang des Materials 2 durch Unterdruck aus den Wänden der Mulde 1 oder durch Überdruck beispielsweie aus dem Stempel 3 fortgesetzt, bis das Material 2 vollständig an der Mulde 1 anliegt.

Beim Ausführungsbeispiel nach Fig.2 ist der Stempel 30 mit einem hohl ausgebildeten Boden 5 ausgestattet, wodurch das Material 2 lediglich an der Rippe 4 und nicht am Boden selbst anliegt.

Darüber hinaus ist der Stempel 30 mit einer weiteren Rippe 40 versehen, die oberhalb der ersten Rippe 4 angeordnet ist und ein Anlegen des tiefzuziehenden Materials 2 an den Mantel des Stempels 30 verhindert.

Stempel und Mulde können sowohl einen kreisförmigen Querschnitt aufweisen oder in jeder beliebigen Querschnittsform ausgebildet sein. Sowohl ovale, als auch quadratische oder rechteckige Ausgestaltungen sind möglich.

Der Stempel 3 bzw. 30 kann selbst auch beheizt sein. Durch die Formgebung wird eine gleichmäßige Temperatur im tiefzuziehenden Material während des Tiefziehvorganges aufrecht erhalten.

Es ist auch möglich, die Vorrichtung so auszulegen, dass in ihr sowohl eine Verpackung geformt, diese gefüllt und beispielsweise durch Siegeln verschlossen wird.

Darüber hinaus ist es möglich eine Einrichtung vorzusehen, die es ermöglicht, ein Label oder dergleichen in die Tiefziehform einzulegen.

Ausserdem kann eine Einrichtung vorgesehen sein, die es ermöglicht, den in der Vorrichtung erzeugten Behälter zu dekorieren bzw. beim Tiefziehen zu dekorieren.

In der Vorrichtung können beliebige, tiefziehfähige Materialien verarbeitet werden. Besonders sind dies Ein- und Mehrschichtmaterialien aus Kunststoffmaterial wie z.B. PE, PS, PP, PET, PLA oder dergleichen. Darüber hinaus können auch Barriereschichten beim tiefzuziehenden Material vorgesehen sein. Ebenso kann eine oder mehrere Schichten aus geschäumten Kunststoffmaterialien bestehen. Einzelne oder mehrere Schichten können zusätzlich noch mit einem Füller, vorzugsweise einem mineralischen Füller ausgerüstet sein.

Mit Hilfe der erfindungsgemäßen Vorrichtung wird eine wenigstens annähernd gleichmäßige Dicke im tiefgezogenen Gegenstand erzielt. Material für die Wandungen wird aus dem Bodenbereich herausgezogen.

Dies ermöglicht nicht nur eine gleichmäßige Materialverteilung im tiefgezogenen Gegenstand, sondern auch die Verwendung dünnerer Tiefziehfolien, wodurch sich eine signifikante Materialersparnis ergibt.

Auch die Verarbeitung beliebiger geschäumter, tiefziehfähiger Materialien wird erleichtert und die Herstellung von sehr dünnen, tiefgezogenen Gegenständen aus geschäumtem Material ermöglicht, wobei die Wandstärke dieser Gegenstände in etwa der Wandstärke von nicht geschäumten Gegenständen entspricht.

Das bedeutet, daß beispielsweise üblicherweise tiefgezogene Lebensmittelbecher, insbesondere Joghurtbecher aus kompaktem Material auch aus geschäumtem Material gefertigt werden können, ohne daß die Materialstärke ansteigt. Die Wandstärke solcher Becher liegt oftmals im Bereich von 200µm.

Dabei können Ein- oder Mehrschichtmaterialien aus Kunststoffen wie zum Beispiel PE, PS, PP, PET, PLA oder dergleichen eingesetzt werden. Barriereschichten können vorgesehen sein.

Bei geschäumten Materialien besteht wenigstens eine der Schichten aus einem geschäumten Kunststoffmaterial.

Gerade geschäumte Kunststoffmaterialien sind bislang in zu kompakten Materialien vergleichbaren Materialstärken von um die 200µm nur schwer tiefziehbar.

Hier besteht die Gefahr, daß die Schäumung beim Tiefziehen zerstört wird.

Bei geschäumten und ungeschäumten Ausgangsfolien besteht zudem die Gefahr, dass die Folie beim Tiefziehen aufreißt. Dem wird bislang durch den Einsatz dickeren Ausgangsmaterials entgegengetreten.

Durch die vorliegende Erfindung wird jedoch eine gezielte Steuerung des Tiefziehvorganges ermöglicht, so dass das Tiefziehen von geschäumten und ungeschäumten Materialien deutlich erleichtert wird.

Die Verwendung dünneren Ausgangsmaterials wird ermöglicht.

Es ergibt sich eine signifikante Materialeinsparung bei besserer Qualität der tiefgezogenen Gegenstände.

Die Qualität und Dickenverteilung kann auch durch die Auswahl des Materials für den Stempel bzw. Vorstrecker noch beeinflusst werden, da unterschiedliche Materialien unterschiedliche Gleiteigenschaften gegenüber den Kunststoffen bei verschiedenen Temperaturen aufweisen.

## Patentansprüche

1. Vorrichtung zum Tiefziehen einer tiefziehfähigen Kunststofffolie mit einer der späteren Form des tiefzuziehenden Gegenstandes angepassten Mulde (1) und einem Stempel (3,30) zum Hineindrücken des Ausgangsmaterials (2) in die Mulde (1), **dadurch gekennzeichnet, daß** der Stempel (3,30) wenigstens eine am Umfangsrand vorstehende Rippe (4,40) aufweist, wobei mehrere Rippen (4,40) am Umfangsrand übereinander angeordnet sind, so dass eines Ausgangsmaterials nicht mehr voll flächig am Stempel anliegt und sich leichter über die Fläche gesehen ausgleichen kann.

2. Vorrichtung nach Anspruch 1, **dadurch gekennzeichnet, daß** der Boden (5) des Stempels (3,30) von unten her kalottenförmig hohl ausgebildet ist.

3. Vorrichtung nach einem der vorhergehenden Ansprüche, **dadurch gekennzeichnet, daß** die Mulde (1) und der Stempel (3,30) einen kreisförmigen Querschnitt aufweisen.

4. Vorrichtung nach einem der Ansprüche 1 bis 2, **dadurch gekennzeichnet, daß** die Mulde (1) und der Stempel (3,30) einen von der Kreisform abweichenden ovalen, quadratischen oder rechteckigen Querschnitt aufweisen.

5. Vorrichtung nach einem der vorangehenden Ansprüche, **dadurch gekennzeichnet, daß** die Vorrichtung so ausgelegt ist, daß innerhalb der Vorrichtung sowohl eine Verpackung geformt, diese gefüllt und beispielsweise durch Siegeln verschlossen wird.

6. Vorrichtung nach einem der vorangehenden Ansprüche, **dadurch gekennzeichnet, daß** eine Einrichtung vorgesehen ist, die es ermöglicht, ein Label oder dergleichen in die Tiefziehform einzulegen.

7. Vorrichtung nach einem der vorangehenden Ansprüche, **dadurch gekennzeichnet, daß** eine Einrichtung vorgesehen ist, die es ermöglicht, den in der Vorrichtung erzeugten Behälter zu dekorieren bzw. beim Tiefziehen zu dekorieren.

8. Vorrichtung nach einem der vorangehenden Ansprüche, **dadurch gekennzeichnet, daß** die Vorrichtung zur Verarbeitung beliebiger, tiefziehfähiger Materialien, insbesondere zur Verarbeitung von Ein- oder Mehrschichtmaterialien aus Kunststoffmaterialien wie zum Beispiel PE, PS, PP, PET, PLA oder dergleichen, wobei auch Barriereschichten vorgesehen sein können, ausgelegt ist.

9. Vorrichtung nach einem der vorangehenden Ansprüche, **dadurch gekennzeichnet, daß** die Vorrichtung zur Verarbeitung beliebiger geschäumter, tiefziehfähiger Materialien, insbesondere zur Verarbeitung von Ein- oder Mehrschichtmaterialien aus Kunststoffmaterialien wie zum Beispiel PE, PS, PP, PET, PLA oder dergleichen, wobei auch Barriereschichten vorgesehen sein können und mindestens eine Schicht aus einem geschäumten Kunststoffmaterial besteht, ausgelegt ist.

10. Vorrichtung nach einem der vorangehenden Ansprüche, **dadurch gekennzeichnet, daß** der Stempel bzw. Vorstrecker aus einem an die tiefzuziehenden Materialien angepassten Material gefertigt ist.

## Claims

1. Device for deep drawing a deep-drawable plastics material film with a cavity member (1), which is adapted to the later shape of the article to be deep drawn, and a die (3, 30) for pressing the starting material (2) into the cavity member (1), **characterised in that** the die (3, 30) has at least one rib (4, 40) protruding at the circumferential edge, wherein several ribs (4, 40) are so arranged one above the other at the circumferential edge that a starting material no longer bears over the whole area against the die and can more easily even out as seen over the area.

2. Device according to claim 1, **characterised in that** the base (5) of the die (3, 30) is formed from below to be of hollow cap shape.

3. Device according to one of the preceding claims, **characterised in** the cavity member (1) and the die (3, 30) have a circular cross-section.

4. Device according to one of claims 1 and 2, **characterised in that** the cavity member (1) and the die (3, 30) have an oval, square or rectangular cross-section departing from a circular shape.

5. Device according to any one of the preceding claims, **characterised in that** the device is designed so that within the device an item of packaging is formed, filled and closed by, for example, sealing.

6. Device according to any one of the preceding claims, **characterised in that** equipment is provided which makes it possible to introduce a label or the like into the deep-drawing mould.

7. Device according to any one of the preceding claims, **characterised in that** equipment is provided which makes it possible to decorate containers produced in the device or to decorate during the deep drawing.

8. Device according to any one of the preceding claims, **characterised in that** the device is designed for processing any materials capable of deep drawing, particularly for processing single-layer or multi-layer materials of plastic such as, for example, PE, PS, PP, PET, PLA or the like, wherein barrier layers can also be provided.

9. Device according to any one of the preceding claims, **characterised in that** the device is designed for processing any foamed materials capable of deep drawing, particularly for processing single-layer or multi-layer materials of plastic such as, for example, PE, PS, PP, PET, PLA or the like, wherein barrier layers can also be provided and at least one layer consists of a foamed plastics material.

10. Device according to any one of the preceding claims, **characterised in that** the die or pre-stretcher is made from a material adapted to the materials to be deep drawn.

## Revendications

1. Dispositif pour emboutir une feuille de matière plastique emboutissable, avec une cuvette (1) adaptée à la forme ultérieure de l'objet à emboutir et avec un poinçon (3, 30) pour enfoncer la matière première (2) dans la cuvette (1), **caractérisé en ce que** le poinçon (3, 30) présente au moins une nervure (4, 40) dépassant sur le bord périphérique, sachant que plusieurs nervures (4, 40) sont disposées superposées sur le bord périphérique, de sorte qu'une matière première ne s'applique plus sur toute la surface contre le poinçon et peut être plus facilement égalisée, considéré sur la surface.

2. Dispositif selon la revendication 1, **caractérisé en ce que** le fond (5) du poinçon (3, 30) est réalisé creux, en forme de calotte à partir du bas.

3. Dispositif selon l'une des revendications précédentes, **caractérisé en ce que** la cuvette (1) et le poinçon (3, 30) présentent une section circulaire.

4. Dispositif selon l'une des revendications 1 à 2, **caractérisé en ce que** la cuvette (1) et le poinçon (3, 30) présentent une section ovale, carrée ou rectangulaire, différant de la forme circulaire.

5. Dispositif selon l'une dés revendications précédentes, **caractérisé en ce que** le dispositif est conçu de telle sorte qu'à l'intérieur du dispositif, un emballage est mis en forme, rempli et fermé par exemple par scellement.

6. Dispositif selon l'une des revendications précédentes, **caractérisé en ce qu'**il est prévu un équipement qui permet de mettre en place une étiquette ou analogue dans le moule d'emboutissage.

7. Dispositif selon l'une des revendications précédentes, **caractérisé en ce qu'**il est prévu un équipement qui permet de décorer le récipient produit dans le dispositif, ou encore de le décorer lars de l'emboutissage.

8. Dispositif selon l'une des revendications précédentes, **caractérisé en ce que** le dispositif est conçu pour le traitement de matériaux emboutissables quelconques, en particulier pour le traitement de matériaux à une ou plusieurs couches constitués de matières plastiques comme par exemple le polyéthylène (PE), le polystyrène (PS), le polypropylène (PP), le polyéthylène-téréphtalate (PET), le PLA ou analogues, sachant que des couches formant barrière peuvent également être prévues.

9. Dispositif selon l'une des revendications précédentes, **caractérisé en ce que** le dispositif est conçu pour le traitement de matériaux emboutissables expansés quelconques, en particulier pour le traitement de matériaux à une ou plusieurs couches constitués de matières plastiques comme par exemple le polyéthylène (PE), le polystyrène (PS), le polypropylène (PP), le polyéthylène-téréphtalate (PET), le PLA ou analogues, sachant que des couches formant barrière peuvent également être prévues et qu'au moins une couche est constituée d'une matière plastique expansée.

10. Dispositif selon l'une des revendications précédentes, **caractérisé en ce que** le poinçon ou dégrossisseur est fabriqué en un matériau adapté aux matériaux à emboutir.
